(19) Europäisches Patentamt
European Patent Office
Office européen des brevets

(11) **EP 3 705 716 B1**

(12) **EUROPEAN PATENT SPECIFICATION**

(45) Date of publication and mention
of the grant of the patent:
**09.11.2022 Bulletin 2022/45**

(21) Application number: **19160638.3**

(22) Date of filing: **04.03.2019**

(51) International Patent Classification (IPC):
**F03D 7/02** (2006.01) **F03D 17/00** (2016.01)

(52) Cooperative Patent Classification (CPC):
**F03D 7/0292; F03D 17/00;** F05B 2270/32;
F05B 2270/322; F05B 2270/332; Y02E 10/72

(54) **THRUST LIMITS FOR WIND TURBINES**

SCHUBBEGRENZUNGEN FÜR WINDTURBINEN

LIMITES DE POUSSÉE POUR ÉOLIENNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.09.2020 Bulletin 2020/37**

(73) Proprietor: **GE Renewable Germany GmbH
20097 Hamburg (DE)**

(72) Inventor: **PERRONE, Francesco
Hamburg (DE)**

(74) Representative: **de Rooij, Mathieu Julien
Bardehle Pagenberg S.L.
Avenida Diagonal 420, 1° 1ª
08037 Barcelona (ES)**

(56) References cited:
EP-A1- 2 799 711      WO-A1-2014/161626
WO-A1-2018/184645      US-A1- 2017 268 487

• **ABDALLAH I ET AL: "Influence of the control
system on wind turbine reliability in extreme
turbulence", JOURNAL OF PHYSICS:
CONFERENCE SERIES, INSTITUTE OF PHYSICS
PUBLISHING, BRISTOL, GB, vol. 524, no. 1, 16
June 2014 (2014-06-16) , page 12069,
XP020266233, ISSN: 1742-6596, DOI:
10.1088/1742-6596/524/1/012069 [retrieved on
2014-06-16]**

**Description**

The present disclosure relates to defining thrust limits for aerodynamic thrust on rotor of wind turbines. The present disclosure further relates to using such thrust limits in wind turbine operation.

BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven") or through the use of a gearbox. This way, the generator produces electricity which can be supplied to the electrical grid.

A variable speed wind turbine may typically be controlled by varying the generator torque and the pitch angle of the blades. As a result, aerodynamic torque, rotor speed and electrical power will vary.

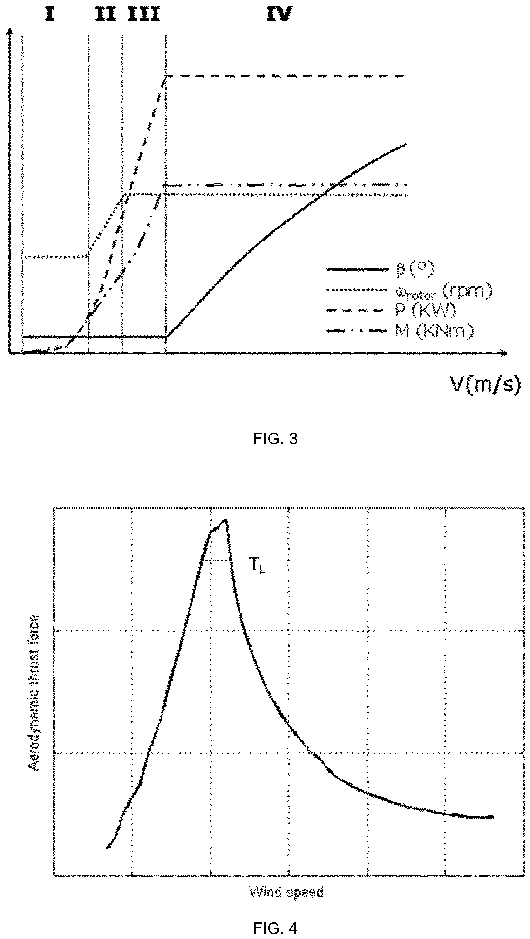

A common prior art control strategy of a variable speed wind turbine is described with reference to figure 3. In figure 3, the operation of a typical variable speed wind turbine is illustrated in terms of the pitch angle ($\beta$), the electrical power generated (P), the generator torque (M) and the rotational velocity of the rotor ($\omega$), as a function of the wind speed.

In a first operational range, from the cut-in wind speed to a first wind speed (e.g. approximately 5 or 6 m/s), the rotor may be controlled to rotate at a substantially constant speed that is just high enough to be able to accurately control it. The cut-in wind speed may be e.g. approximately 3 m/s.

In a second operational range, from the first wind speed (e.g. approximately 5 or 6 m/s) to a second wind speed (e.g. approximately 8.5 m/s), the objective is generally to maximize power output while maintaining the pitch angle of the blades constant so as to capture maximum energy. In order to achieve this objective, the generator torque and rotor speed may be varied so as keep the tip speed ratio A (tangential velocity of the tip of the rotor blades divided by the prevailing wind speed) constant so as to maximize the power coefficient Cp.

In order to maximize power output and keep Cp constant at its maximum value, the rotor torque may be set in accordance with the following equation: $T = k.\omega^2$, wherein k is a constant, and $\omega$ is the rotational speed of the generator. In a direct drive wind turbine, the generator speed substantially equals the rotor speed. In a wind turbine comprising a gearbox, normally, a substantially constant ratio exists between the rotor speed and the generator speed.

In a third operational range, which starts at reaching nominal rotor rotational speed and extends until reaching nominal power, the rotor speed may be kept constant, and the generator torque may be varied to such effect. In terms of wind speeds, this third operational range extends substantially from the second wind speed to the nominal wind speed e.g. from approximately 8.5 m/s to approximately 11 m/s.

In a fourth operational range, which may extend from the nominal wind speed to the cut-out wind speed (for example from approximately 11 m/s to 25 m/s), the blades may be rotated ("pitched") to maintain the aerodynamic torque delivered by the rotor substantially constant. In practice, the pitch may be actuated such as to maintain the rotor speed substantially constant. At the cut-out wind speed, the wind turbine's operation is interrupted.

In the first, second and third operational ranges, i.e. at wind speeds below the nominal wind speed (the sub-nominal zone of operation), the blades are normally kept in a constant pitch position, namely the "below rated pitch position". Said default pitch position may generally be close to a 0º pitch angle. The exact pitch angle in "below rated" conditions however depends on the complete design of the wind turbine.

The before described operation may be translated into a so-called power curve, such as the one shown in figure 3. Such a power curve may reflect the theoretical optimum operation of the wind turbine. However, in a range of wind speeds around the nominal wind speed, the aerodynamic thrust on the rotor may be high, as illustrated in figure 4. Such a high aerodynamic thrust leads to high bending loads at the blade root. The high loads at the blade root in turn can lead to high loads in the tower. If a wind turbine suffers from high loads repeatedly, the fatigue life of wind turbine components such as the blades can be reduced.

It is known in the prior art to define a thrust limit. A thrust limit may be understood as a maximum level of aerodynamic thrust on the rotor that may not be exceeded in operation. The operation of the wind turbine is thus adjusted, when necessary, to avoid the thrust exceeding the thrust limit. The operation thus deviates from the theoretical optimum operation, and the electrical energy output is negatively affected.

In some sites, and particularly in offshore applications, it has been found that blades sometimes suffer from high loads at the root and fatigue damage in highly turbulent winds, even if such a thrust limit has been defined.

EP 2 799 711 discloses a a method of operating a wind turbine having a rotor with a plurality of blades, a system for determining one or more loads on the wind turbine, a historical register of data on the wind turbine operation, and a control system for controlling one or more operational parameters of the wind turbine. The method comprises determining the loads on the wind turbine, and storing the determined loads on the wind turbine in the historical register. The method further comprises obtaining, from the historical register, a characteristic indicative of the loads on the wind turbine accumulated over time, and determining one or more wind thrust limits depending on the obtained characteristic indicative of the loads accumulated over time. One or more operational parameters of the wind turbine are controlled to keep the wind thrust on the wind turbine within the determined wind thrust limits.

SUMMARY

In one aspect, a method according to claim 1 is provided for defining a plurality of thrust limits for a wind turbine having a rotor with a plurality of blades and being located at a site. The thrust limits define values of aerodynamic thrust on the rotor not to be exceeded in operation. The method comprises providing a wind speed distribution representative for the site, and defining a plurality of isolines of constant turbulence probability representing a turbulence parameter as a function of wind speed. The isolines correspond to quantile levels of turbulence of the wind speed distribution. The turbulence parameter is indicative of wind speed variation. The method further comprises defining turbulence ranges with respect to the isolines and defining thrust limits for the turbulence ranges.

In accordance with this aspect, a plurality of thrust limits can be defined from which one can be selected in operation in accordance with circumstances. For the conditions of high turbulence, a lower thrust limit may be defined and for low turbulence conditions, a higher thrust limit may be defined. By selecting thrust limits in this manner, high loads on wind turbine components can be reduced, while maximizing power output of the wind turbine when possible (i.e. in low turbulence conditions).

By using a probabilistic approach based on quantile levels of turbulence for the definition of different thrust levels, a good possible trade-off between the alleviation of the structural loads and the power extraction from the wind has been found.

Definition of thrust limits in this manner also allows for site specific tuning based on the turbulence intensity distribution at the site of interest. Both the confidence levels and the thresholds can be tuned to maximize the power extraction from the wind for sites with relatively low turbulence, considering that the load level will probably stay within the design boundaries. On the other hand, for sites where high turbulence may be expected, a better trade-off between structural safety (in terms of loads) and power extraction can be achieved by a proper definition of the confidence levels and relative thrust thresholds.

In another aspect, the present disclosure provides a wind turbine according to claim 10 is provided.

BRIEF DESCRIPTION OF THE DRAWINGS

Non-limiting examples of the present disclosure will be described in the following, with reference to the appended drawings, in which:

Figure 1 illustrates a perspective view of a wind turbine according to one example;

Figure 2 illustrates a simplified, internal view of a nacelle of a wind turbine according to one example;

Figure 3 illustrates a power curve of a wind turbine according to the prior art;

Figure 4 schematically illustrates an aerodynamic thrust as a function of wind speed when a wind turbine is operated according to a theoretical power curve;

Figure 5 schematically illustrates an example of determining an isoline of constant turbulence;

Figure 6 schematically illustrates an example of a method of operating a wind turbine;

Figures 7 - 9 schematically illustrate the effect of dynamic thrust levels for different wind distributions; and

Figures 10 and 11 schematically illustrate the effect of varying thrust levels on the annual energy yield and the blade root bending moments.

DETAILED DESCRIPTION OF EXAMPLES

In these figures the same reference signs have been used to designate matching elements.

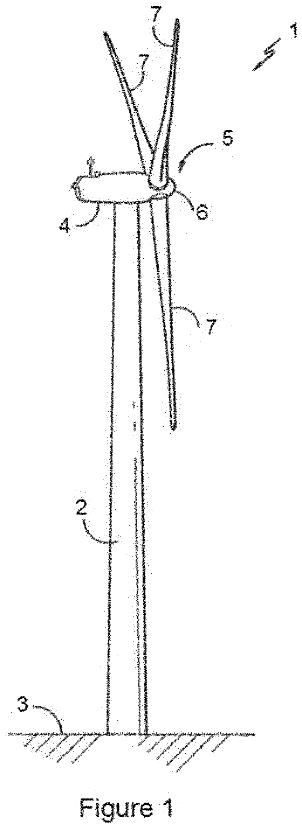

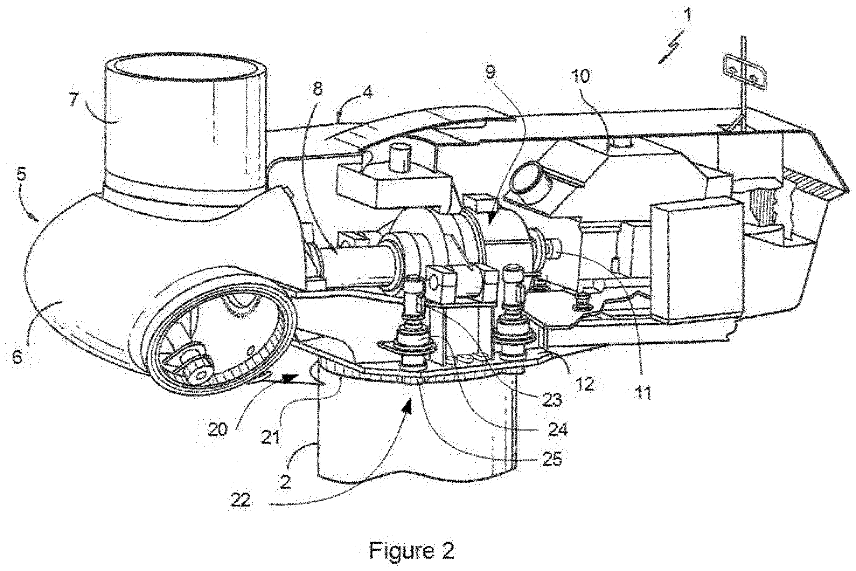

Figure 1 illustrates a perspective view of one example of a wind turbine 1. As shown, the wind turbine 1 includes a tower 2 extending from a support surface 3, a nacelle 4 mounted on the tower 2, and a rotor 5 coupled to the nacelle 4. The rotor 5 includes a rotatable hub 6 and at least one rotor blade 7 coupled to and extending outwardly from the hub 6. For example, in the illustrated example, the rotor 5 includes three rotor blades 7. However, in an alternative embodiment, the rotor 5 may include more or less than three rotor blades 7. Each rotor blade 7 may be spaced from the hub 6 to facilitate rotating the rotor 5 to enable kinetic energy to be transferred from the wind into usable mechanical energy, and subsequently, electrical energy. For instance, the hub 6 may be rotatably coupled to an electric generator 10 (Figure 2) positioned within the nacelle 4 or forming part of the nacelle to permit electrical energy to be produced. The rotation of the rotor may be directly transmitted, e.g. in direct drive wind turbines, or through the use of a gearbox to a generator.

Figure 2 illustrates a simplified, internal view of an example of a nacelle 4 of a wind turbine 1. The rotor 5 may include a main rotor shaft 8 coupled to the hub 6 for rotation therewith. The generator 10 may then be coupled to the rotor shaft 8 such that rotation of the rotor shaft 8 drives the generator 10. For instance, in the illustrated embodiment, the generator 10 includes a generator shaft 11 rotatably coupled to the rotor shaft 8 through a gearbox 9.

In Figure 2, the wind turbine rotor 5 may be rotatably mounted on a support frame 12 through two rotor bearings at a coupling region. In other examples, the support frame 12 may not extend through the hub 6 and therefore the rotor may be supported by a single rotor bearing, commonly called the main bearing.

The generator 10 may be electrically coupled to the converter. The wind turbine converter may adapt the output electrical power of the generator to the requirements of the electrical grid. In some examples, the converter may be placed inside the nacelle 4; however, in other examples it may be placed in other locations of the wind turbine.

It should be appreciated that the rotor 5 of the wind turbine and the generator 10 may be supported by a bedplate or a support frame 12 positioned atop the wind turbine tower 2.

The nacelle 4 is rotatably coupled to the tower 2 through a yaw system 20. The yaw system comprises a yaw bearing (not visible in Figure 2) having two bearing components configured to rotate with respect to the other. The tower 2 is coupled to a first bearing component and the nacelle 4, e.g. the bedplate or support frame 12, is coupled to the second bearing component. The yaw system 20 comprises an annular gear 21 and a plurality of yaw drives 22 with a motor 23, a gearbox 24 and a pinion 25 for meshing with the annular gear for rotating one of the bearing components with respect to the other.

Figure 3 illustrates a power curve of a wind turbine according to the prior art. The operation of a variable speed wind turbine as a function of wind speed has hereinbefore explained. It may be noted that the operation of the wind turbine is not necessarily based on an actual direct measurement of wind speed. Rather, the wind speed may be derived or estimated from the speed of rotation of the rotor. Typically the generator speed is measured in wind turbines. From the generator speed, the rotor speed can easily be derived.

Figure 4 schematically illustrates an aerodynamic thrust force as a function of wind speed when a wind turbine is operated according to a theoretical power curve. As may be seen in figure 4, the aerodynamic thrust on the rotor peaks around the nominal wind speed. In accordance with aspects of the present disclosure a plurality of thrust levels may be introduced to avoid the high peak in aerodynamic thrust and to thereby limit structural loads.

In figure 4, a single thrust limit $T_L$ is indicated. In accordance with aspects of the present disclosure, a plurality of thrust limits may be defined. And depending on the level of turbulence at a given moment, one of these thrust limits may be selected. The wind turbine is then operated to ensure that the aerodynamic thrust on the rotor stays below the selected thrust limit.

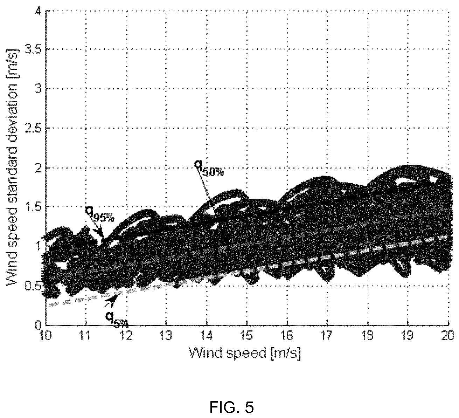

Figure 5 schematically illustrates an example of determining an isoline of constant turbulence probability. In a method for defining a plurality of thrust limits for a wind turbine wherein the thrust limits define values of aerodynamic thrust on the rotor not be exceeded in operation the example of figure 5 may be used. A wind speed distribution representative for the site is provided. In this specific example, a wind range from 10 m/s to 20 m/s has been provided. Typically, thrust limits will act in a range of wind speeds around the nominal wind speed, e.g. from 1 - 3 m/s below the nominal wind speed to 1 - 3 m/s above the nominal wind speed.

The wind speed distribution may be obtained from wind speed measurements, e.g. using a met mast, prior to installation of the wind turbine or wind park. The wind speed distribution might also be obtained from wind speed measurements in similar sites or from computer simulation.

In figure 5, a plurality of isolines of constant turbulence probability is defined. The isolines represent a turbulence parameter indicative of wind speed variation as a function of wind speed. In this particular example, the turbulence parameter is the standard deviation of the wind speed with respect to a mean wind speed. In further examples, other turbulence parameters might be used, such as e.g. turbulence intensity or variance of wind speed. Turbulence intensity may be defined as standard deviation divided by mean wind speed. The standard deviation is the square root of the variance.

In this particular example moreover, the turbulence parameter is assumed to be a linear function of the wind speed.

The isolines in figure 5 correspond to quantile levels of probability of turbulence of the wind speed distribution. The three lines correspond to 5%, 50% and 95% quantiles. I.e. a quantile-based regression has been used. The standard deviation in this example is assumed to be a linear function of the wind speed:

$$\sigma_{lim} = a_\sigma V + b_\sigma \in \left[V_{on}, V_{off}\right]$$

Herein $\sigma_{lim}$ is the standard deviation as a function of the wind speed V for one of the isolines. The parameters $a_\sigma$ and $b_\sigma$ are the parameters of the linear function. $V_{on}$ and $V_{off}$ are the wind speed at the lower end and the upper end of the wind range for which the linear functions are to be determined.

Different parameters $a_\sigma$ and $b_\sigma$ may be defined for each of the isolines.

The wind speed distribution may be regarded as a collection of data points of combinations of wind speed and standard deviation thereof.

In the quantile-based regression, the cost function $J\sigma$ to be minimized for a constant quantile level is given in the following equation:

$$J_\sigma(a_\sigma, b_\sigma) = \int_{V_{on}}^{V_{off}} (a_\sigma V + b_\sigma)\, dV$$

The 95% isoline represents a confidence level of 95% that turbulence in the wind speed distribution is below the indicated level, i.e. in this example, the standard deviation of wind speed for a given wind speed is below the line.

In this particular example, a range of 10 m/s to 20 m/s was chosen, but it should be clear that different ranges of wind speed might be used. In some examples, a wind speed range may be split in smaller portions e.g. 10 - 12 m/s, 12 - 14 m/s and so on.

And for each of these smaller rages quantile-based regression could be performed to find portions of an isoline. In such a case, with the above equations, an isoline may comprise several linear portions.

Once the isolines have been defined, turbulence ranges can be defined with respect to the isolines. The isolines can be defined above an isoline, below an isoline or in between isolines. One or more of the edges or ends of the turbulence ranges are thereby defined by the isolines.

In this particular example, a turbulence range may be defined below 5%, a second turbulence range extending from 5 to 95%, and a third turbulence range may be defined for turbulence above the 95% isoline. It should be clear that the values of 5, 50 and 95% are indicated merely as examples and that other values could be used. It should also be clear that more isolines (and more turbulence ranges) could be defined than in the example here.

Finally, for each of these ranges, thrust limits may be defined such that (peak) loads are maintained under a predefined acceptable level even in highly turbulent winds. On the other hand, if the wind is less turbulent, higher limits may be used because the peak loads will stay below an acceptable level.

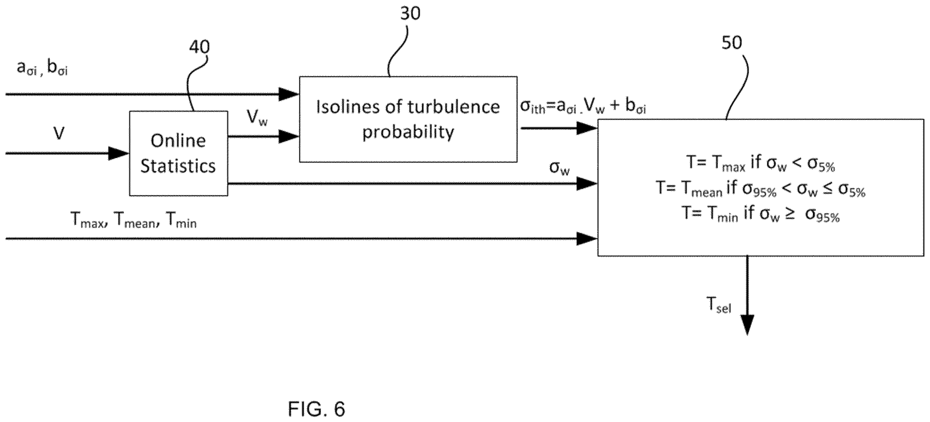

Figure 6 schematically illustrates an example of a method of operating a wind turbine. Once a plurality of thrust limits has been defined for different turbulence ranges as was just illustrated with reference to figure 5, a method for operating a wind turbine might comprise estimating a wind speed and the turbulence parameter and selecting a thrust limit based on the estimated turbulence parameter and the estimated wind speed. Then the wind turbine may be operated such that a thrust on the rotor is below the selected thrust limit.

Input for block 30 includes the parameters $a_{\sigma i}$ and bai for each of n defined isolines, wherein n is the total number of isolines, and i is the number of an individual isoline. The output of the block is one or more values of standard deviation $\sigma_i$ for the given mean wind speed $V_w$. In this specific case, two standard deviation values are defined for each wind speed, $\sigma_{5\%}$ and $\sigma_{95\%}$.

In operation, the wind speed V might be determined substantially continuously.

Substantially continuously herein means that the wind speed is determined with sufficiently high frequency such that it can be taken into account in a meaningful manner in wind turbine operation.

A wind turbine may comprise a remote sensing system to measure wind conditions upstream of the rotor, e.g. a SODAR or LIDAR. And the control system of the wind turbine may be configured to receive the wind conditions from the remote sensing system and to determine the wind speed and turbulence impinging on the rotor based on the measurements of the wind upstream.

Alternatively, the wind turbine may comprise a nacelle anemometer, and the control system is configured to determine wind speed and turbulence based on measurements of the nacelle anemometer. I.e. the nacelle anemometer gives continuous measurements of wind speed V. For an interval (the most recent interval), a mean wind speed $V_w$, and a wind speed variation (in this example standard deviation $\sigma_w$) might be calculated from the data from the nacelle anemometer. However, it is known that the reliability of wind speed measurements using a nacelle anemometer is limited since the wind is disturbed when it reaches the anemometer.

In yet a further example, estimating a wind speed may comprise determining a power output, a pitch angle of the blades and a rotational speed of the rotor. Based on the power output, the pitch angle of the blades and the rotational speed of the rotor, wind speed may be estimated using a Kalman filter. Typically, suitable sensors and systems are provided on a wind turbine to measure power output, a pitch angle from the blades (this should be available for suitable pitch control) and the rotational speed of the rotor (typically, the speed of rotation of the generator rotor may be measured). The use of a Kalman filter has been found to be reliable to estimate wind speed.

From a time series of wind speed measurements V, the mean wind speed $V_w$ and the turbulence parameter indicative of variation of wind speed may be derived at block 40. One of the outputs of block 40 is the chosen turbulence parameter. In this case the standard deviation $\sigma_w$ with respect to a mean wind speed is used. The output of block 40 is provided as input to blocks 30 and 50.

Within block 50, a plurality of turbulence ranges is defined, below the lowest quantile level, above the highest quantile level and in between the quantile levels. For each of the turbulence ranges, a thrust limit is defined. In this particular example, $T_{max}$ is the highest thrust limit, $T_{min}$ is the lowest thrust limit and $T_{mean}$ is the average thrust limit. When $T_{min}$ is activated, higher priority is given to maintaining loads under an acceptable level and potential electrical power output is most sacrificed.

If the turbulence level (output from block 40) and wind speed (output from block 40) are known at a given moment, then it is also known in which turbulence range the wind turbine is operating.

If that is known, the suitable thrust limit $T_{sel}$ may be selected from the previously defined thrust limits at block 50. The wind turbine may then be operated to make sure that the aerodynamic thrust on the rotor stays below the selected limit.

To this end, the aerodynamic thrust on the rotor could be measured directly, e.g. using suitable strain or deformation sensors in the blades. Alternatively, the thrust on the rotor can be estimated by calculating the thrust based on the estimated wind speed, the rotational speed of the rotor and the pitch angle of the blades.

In operation, then an estimated thrust on the rotor can be compared with the selected thrust limit, and if the estimated thrust is above the selected thrust limit, a collective pitch signal may be sent (from the wind turbine control) to the blades of the rotor (or to the pitch control systems) to pitch the blades and reduce the thrust on the rotor.

In a further aspect of the present disclosure, and in accordance with the illustrated example, a wind turbine is provided. The wind turbine comprises a rotor with a plurality of blades, one or more pitch systems for rotating the blades around longitudinal axes of the blades, a generator and a control system. The control system is configured to estimate a wind speed and a turbulence, and to select a thrust level based on the turbulence and the estimated wind speed, wherein the thrust level is selected from a plurality of thrust limits for different turbulence ranges and to send signals to the pitch systems to collectively pitch the blades such that aerodynamic thrust on the rotor is below the selected thrust level. The plurality of thrust levels has been determined by quantile-based regression of a wind speed distribution of wind speed and a parameter indicative of turbulence.

In examples, a Kalman filter technique may be employed to estimate the wind speed, with the Kalman filter being fed by variables such as the power output, the blade pitch angle and the rotational speed of the rotor

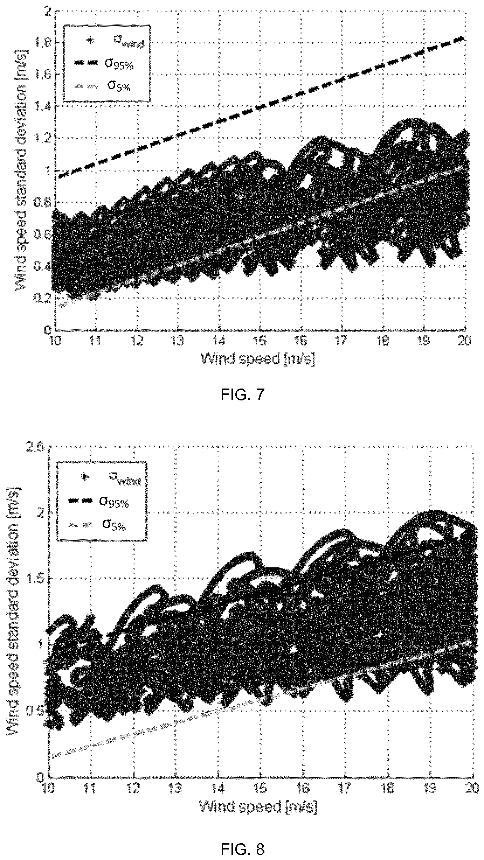

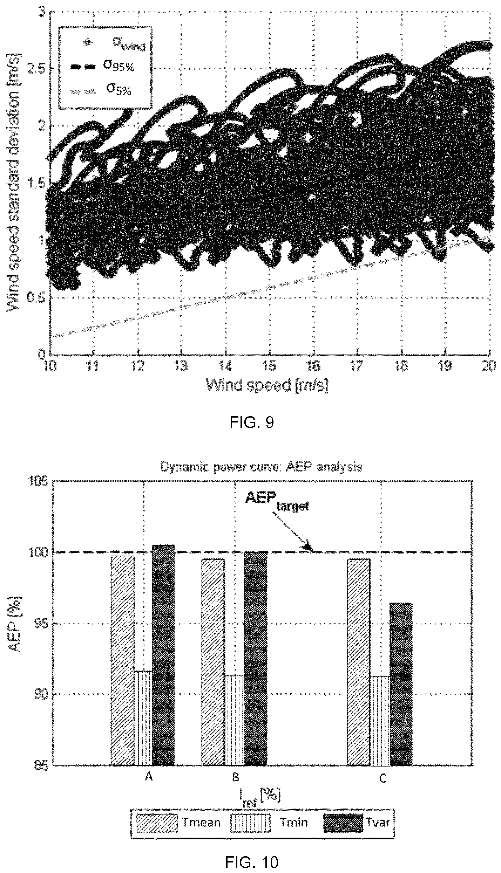

Figures 7 - 9 schematically illustrate the effect of dynamic thrust levels for different wind distributions. Figures 7 - 9 illustrate different wind speed distributions for the same wind turbine at a given site. In accordance with the examples hereinbefore described, based on a specific wind speed distribution, quantile levels of turbulence probability have been defined. In figure 7, at the same site, the wind has relatively low turbulence intensity. In figure 8, the wind speed distribution is average, or substantially comparable to the theoretical wind speed distribution. Finally, in figure 9, a wind speed distribution that has relatively high turbulence is shown.

In the case of figure 7, the thrust limit that will be selected often is a high limit, prioritizing energy production. In the case of figure 9 however, the thrust limit that will more often be selected is a rather low limit, sacrificing power output but ensuring that loads stay under a predefined limit.

For all cases, the wind turbine may incorporate some form of control to avoid rapidly changing thrust limits. This could happen e.g. when the turbulence is close to an isoline. To avoid such rapid changes, hysteresis control may be incorporated. One way to implement such a control might be a time delay between entering a thrust range and the selection of a thrust limit. Another way to implement such a control is to have separations between turbulence ranges, and to (linearly) vary the thrust limits between the defined thrust ranges.

In one example of operation, for each of the predefined isolines, one or more check levels are defined, and wherein a thrust limit is not changed until the wind turbulence parameter reaches one of the check levels. The check levels may define small bands around the isolines.

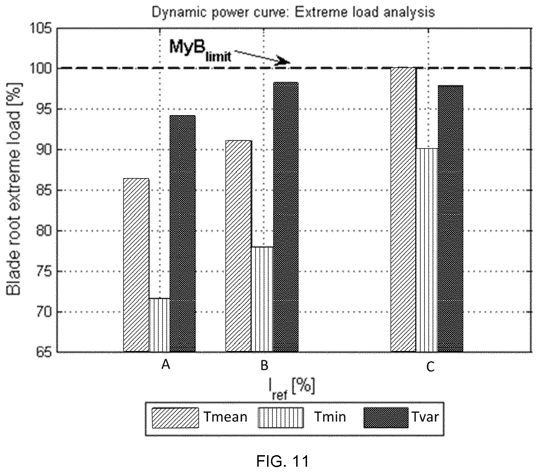

Figures 10 and 11 schematically illustrate the effect of varying thrust levels on the annual energy yield and the blade root bending moments. In figure 10, the AEP (Annual Energy Production) of a wind turbine with three different setting in three different scenarios is illustrated. The three different settings include a single high thrust limit $T_{mean}$, a single low thrust limit $T_{min}$, and a plurality of thrust limits $T_{var}$. The variable thrust limits include $T_{min}$, $T_{mean}$ and a $T_{max}$ higher than $T_{mean}$ as defined in accordance with examples of the present disclosure. The three scenarios include wind speed simulations with different levels of turbulence intensity, indicated with letters A, B and C. Scenario A corresponds to a scenario with relatively low or little turbulence, scenario B corresponds to "average" turbulence, whereas scenario corresponds to a highly turbulent winds.

In figure 11, the bending moment at the blade root for the same three settings ($T_{mean}$, $T_{min}$, $T_{var}$) and same three simulated scenarios (A, B and C) are shown. It may be seen in figure 10 that dynamically varying the thrust limits results in an increased annual energy production in the scenarios A and B. It may be seen in figure 11 that dynamically varying thrust limits also ensure that loads are controlled. In the most turbulent wind scenario (C), the blade root moment reaches its limit for the control with a single high thrust limit. In scenario C, the single thrust limit yields slightly higher annual energy production but at a significant cost of high loads. These high loads may result in fatigue damage which may lead to a worse performance in the future or to premature replacement or retirement of the wind turbine or its components.

Definition of thrust limits in the herein disclosed manner with quantile-based regression allows for site specific tuning based on the turbulence intensity distribution at the site of interest. Both the confidence levels (quantiles) and the thresholds can be tuned to maximize the power extraction from the wind for sites with relatively low turbulence, whereas for sites where high turbulence, a better trade-off between structural safety (in terms of loads) and power extraction can be achieved by a proper definition of the confidence levels and relative thrust thresholds.

In accordance with the herein disclosed examples, a method for operating a wind turbine including a rotor with a plurality of blades has been disclosed. The method may comprise determining a time series of wind speeds and deriving a mean wind speed and a turbulence parameter indicating variability of the wind speed from the time series. Then, a thrust limit may be selected from a plurality of thrust limits based on the derived turbulence parameter and wind speed. Based on the selected thrust limit, the wind turbine may be operated to ensure that a thrust on the rotor is below the selected thrust limit.

The plurality of thrust limits may be defined for ranges of the turbulence parameter for each possible wind speed (within a wind speed range). And the ranges of the turbulence parameter at mean wind speed are defined by confidence intervals that the turbulence parameter for the mean wind speed is below a given value in wind data representative for a location of the wind turbine.

In some examples, the wind data representative for a location of the wind turbine includes data for a band of wind speeds including a nominal wind speed of the wind turbine. It is for wind speeds around the nominal wind speed that the aerodynamic thrust on the rotor and the corresponding loads can be high. For wind speeds close to a cut-in wind speed, and wind speeds that are significantly higher than the nominal wind speed that the aerodynamic thrust is relatively low. In the former case, this is because the energy of the wind is low and in the latter case, this is because the blades of the wind turbine have already been pitched to sufficiently high pitch angles to keep the rotor torque at nominal level. The wind speeds close to a cut-in wind speed and close to cut-out wind speed, or significantly higher than a nominal wind speed may be safely excluded from such a probability analysis.

This written description uses examples to disclose the invention, including the preferred embodiments, and also to enable any person skilled in the art to practice the invention, including making and using any devices or systems and performing any incorporated methods. The patentable scope of the invention is defined by the claims.

**Claims**

1. A method for defining a plurality of thrust limits for a wind turbine having a rotor with a plurality of blades and being located at a site, wherein the thrust limits define values of aerodynamic thrust on the rotor not to be exceeded in operation, the method **characterized by** comprising:

   providing a wind speed distribution representative for the site,
   defining one or more isolines of constant turbulence probability representing a turbulence parameter as a function of wind speed, wherein the isolines correspond to quantile levels of turbulence of the wind speed distribution and the turbulence parameter is indicative of wind speed variation; and
defining turbulence ranges with respect to the isolines; and
defining thrust limits for the turbulence ranges.

2. The method according to claim 1, wherein the turbulence parameter indicative of wind speed variation is a standard deviation of a wind speed with respect to a mean value of the wind speed in a time interval.

3. The method according to claim 2, wherein the isolines define the standard deviation as a linear function of the wind speed within a wind speed range.

4. The method according to any of claims 1 - 3, wherein the wind speed distribution for the site is based on wind measurements at a site of the wind turbine.

5. A method for operating a wind turbine including a rotor with a plurality of blades, the method comprising:

   providing a plurality of thrust limits defined in accordance with any of claims 1 -4;
   determining a wind speed and the turbulence parameter;
   selecting a thrust limit based on the determined turbulence parameter and the determined wind speed; and
   operating the wind turbine such that a thrust on the rotor is below the selected thrust limit.

6. The method according to claim 5, wherein operating the wind turbine such that a thrust on the rotor is below the predetermined thrust limit comprises:

   comparing the thrust on the rotor with the selected thrust limit, and
   if the thrust is above the selected thrust limit, sending a collective pitch signal to the blades of the rotor to pitch the blades and reduce the thrust on the rotor.

7. The method according to claim 5 or 6, wherein estimating a wind speed comprises:

   determining a power output;
   determining a pitch angle of the blades;
   determining a rotational speed of the rotor; and
   estimating a wind speed based on the power output, the pitch angle of the blades and the rotational speed of the rotor using a Kalman filter.

8. The method according to claim 6 or 7, comprising estimating the thrust on the rotor and wherein estimating the thrust on the rotor comprises calculating the thrust on the rotor based on the estimated wind speed, the rotational speed of the rotor and the pitch angle of the blades.

9. The method according to any of claims 5-8, wherein for each of the predefined isolines, one or more check levels are defined, and wherein a thrust limit is not changed until the wind turbulence parameter reaches one of the check levels.

10. A wind turbine comprising:

a rotor with a plurality of blades,
one or more pitch systems for rotating the blades around longitudinal axes of the blades,
a generator; and
a control system, wherein the control system is configured to determine a wind speed and a turbulence, and
to select a thrust level based on the turbulence and the estimated wind speed, wherein the thrust level is selected from a plurality of thrust limits for different turbulence ranges and
to send signals to the pitch systems to collectively pitch the blades such that aerodynamic thrust on the rotor is below the selected thrust level, wherein
the plurality of thrust levels are determined by a method according to any of claims 1 - 4.

11. The wind turbine according to claim 10, wherein the control system is configured to determine a speed of the rotor, determine pitch angles of the blades and to determine a power output of the generator, and wherein
the control system is further configured to estimate a wind speed based on the speed of the rotor, the pitch angles of the blades and the power output of the generator.

12. The wind turbine according to claim 11, wherein the control system is further configured to estimate turbulence based on a variation of the wind speed.

13. The wind turbine according to claim 10, further comprising a remote sensing system to measure wind conditions upstream of the rotor and the control system is configured to receive the wind conditions from the remote sensing system and to determine the wind speed and turbulence.

14. The wind turbine according to claim 10, further comprising a nacelle anemometer, and the control system is configured to determine wind speed and turbulence based on measurements of the nacelle anemometer.

**Patentansprüche**

1. Verfahren zum Definieren einer Vielzahl von Schubkraftgrenzen für eine Windturbine, die einen Rotor mit einer Vielzahl von Blättern aufweist und sich an einem Standort befindet, wobei die Schubkraftgrenzen Werte der aerodynamischen Schubkraft auf den Rotor definieren, die im Betrieb nicht überschritten werden dürfen, wobei das Verfahren **dadurch gekennzeichnet ist, dass** es umfasst:

Bereitstellung einer für den Standort repräsentativen Windgeschwindigkeitsverteilung,
Definieren einer oder mehrerer Isolinien mit konstanter Turbulenzwahrscheinlichkeit, die einen Turbulenzparameter als Funktion der Windgeschwindigkeit darstellen, wobei die Isolinien den Quantilniveaus der Turbulenz der Windgeschwindigkeitsverteilung entsprechen und der Turbulenzparameter eine Windgeschwindigkeitsvariation anzeigt; und
Festlegung von Turbulenzbereichen in Bezug auf die Isolinien; und
die Festlegung von Schubkraftgrenzen für die Turbulenzbereiche.

2. Verfahren nach Anspruch 1, wobei der Turbulenzparameter, der die Windgeschwindigkeitsschwankung anzeigt, eine Standardabweichung einer Windgeschwindigkeit in Bezug auf einen Mittelwert der Windgeschwindigkeit in einem Zeitintervall ist.

3. Verfahren nach Anspruch 2, wobei die Isolinien die Standardabweichung als eine lineare Funktion der Windgeschwindigkeit innerhalb eines Windgeschwindigkeitsbereichs definieren.

4. Verfahren nach einem der Ansprüche 1 bis 3, wobei die Windgeschwindigkeitsverteilung für den Standort auf Windmessungen am Standort der Windkraftanlage basiert.

5. Verfahren zum Betreiben einer Windturbine mit einem Rotor mit einer Vielzahl von Blättern, wobei das Verfahren umfasst:

Bereitstellung einer Vielzahl von Schubkraftgrenzen, die nach einem der Ansprüche 1 bis 4 definiert sind;
Bestimmung der Windgeschwindigkeit und des Turbulenzparameters;
Auswahl einer Schubkraftgrenze auf der Grundlage des ermittelten Turbulenzparameters und der ermittelten Windgeschwindigkeit; und
die Windenergieanlage so zu betreiben, dass die Schubkraft des Rotors unter der gewählten Schubkraftgrenze liegt.

**6.** Verfahren nach Anspruch 5, wobei das Betreiben der Windturbine so erfolgt, dass ein Schubkraft auf den Rotor unterhalb der vorbestimmten Schubgrenze liegt:

Vergleichen der auf den Rotor wirkenden Schubkraft mit dem gewählten Schubgrenzwert, und
wenn die Schubkraft über der gewählten Schubkraftgrene liegt, wird ein kollektives Pitch-Signal an die Rotorblätter gesendet, um die Blätter zu neigen und die Schubkraft auf den Rotor zu verringern.

**7.** Verfahren nach Anspruch 5 oder 6, wobei das Schätzen einer Windgeschwindigkeit umfasst:

Bestimmung der Leistungsabgabe;
Bestimmung des Anstellwinkels der Flügel;
Bestimmen einer Drehzahl des Rotors; und
Schätzung der Windgeschwindigkeit auf der Grundlage der Leistungsabgabe, des Anstellwinkels der Blätter und der Drehzahl des Rotors mit Hilfe eines Kalman-Filters.

**8.** Verfahren nach Anspruch 6 oder 7, umfassend das Schätzen der Schubkraft auf den Rotor, wobei das Schätzen der Schubkraft auf den Rotor das Berechnen der Schubkraft auf den Rotor auf der Grundlage der geschätzten Windgeschwindigkeit, der Rotationsgeschwindigkeit des Rotors und des Anstellwinkels der Blätter umfasst.

**9.** Verfahren nach einem der Ansprüche 5 bis 8, wobei für jede der vordefinierten Isolinien ein oder mehrere Prüfpegel definiert sind und ein Schubgrenzwert nicht geändert wird, bis der Windturbulenzparameter einen der Prüfpegel erreicht.

**10.** Eine Windkraftanlage, bestehend aus:

einen Rotor mit einer Vielzahl von Blätter,
ein oder mehrere Verstellsysteme zum Drehen der Blätter um die Längsachsen der Blätter,
einen Generator; und
ein Steuerungssystem, wobei das Steuerungssystem so konfiguriert ist, dass es eine Windgeschwindigkeit und eine Turbulenz bestimmt, und ein Schubkraftniveau auf der Grundlage der Turbulenz und der geschätzten Windgeschwindigkeit auszuwählen, wobei das Schubkraftniveau aus einer Vielzahl von Schubgrenzen für verschiedene Turbulenzbereiche ausgewählt wird, und
Signale an die Verstellsysteme zu senden, um die Blätter gemeinsam so zu verstellen, dass die aerodynamische Schubkraft auf den Rotor unter dem ausgewählten Schubniveau liegt, wobei

die Mehrzahl der Schubstufen durch ein Verfahren nach einem der Ansprüche 1 bis 4 bestimmt werden.

**11.** Die Windturbine nach Anspruch 10, wobei das Steuersystem so konfiguriert ist, dass es eine Drehzahl des Rotors bestimmt, Anstellwinkel der Blätter bestimmt und eine Ausgangsleistung des Generators bestimmt, und wobei
das Steuerungssystem ferner so konfiguriert ist, dass es eine Windgeschwindigkeit auf der Grundlage der Drehzahl des Rotors, der Anstellwinkel der Blätter und der Leistungsabgabe des Generators schätzt.

**12.** Die Windturbine nach Anspruch 11, wobei das Steuerungssystem ferner so konfiguriert ist, dass es die Turbulenz auf der Grundlage einer Variation der Windgeschwindigkeit schätzt.

**13.** Die Windturbine nach Anspruch 10, die ferner ein Fernerkundungssystem umfasst, um die Windbedingungen stromaufwärts des Rotors zu messen, und das Steuerungssystem so konfiguriert ist, dass es die Windbedingungen von dem Fernerkundungssystem empfängt und die Windgeschwindigkeit und Turbulenz bestimmt.

**14.** Die Windturbine nach Anspruch 10, die ferner ein Gondelanemometer umfasst, und das Steuerungssystem so konfiguriert ist, dass es die Windgeschwindigkeit und die Turbulenz auf der Grundlage von Messungen des Gondelanemometers bestimmt.

**Revendications**

**1.** Procédé pour définir une pluralité de limites de poussée pour une éolienne ayant un rotor avec une pluralité de pales et étant située sur un site, dans lequel les limites de poussée définissent des valeurs de poussée aérodynamique sur le rotor à ne pas dépasser en fonctionnement, le procédé étant **caractérisé en ce qu'**il comprend:

fournir une distribution de la vitesse du vent représentative du site,
définir un ou plusieurs isolignes de probabilité de turbulence constante représentant un paramètre de turbulence en fonction de la vitesse du vent, dans lequel les isolignes correspondent à des niveaux de quantile de turbulence de la distribution de la vitesse du vent et le paramètre de turbulence est indicatif de la variation de la vitesse du vent ; et
définir des intervalles de turbulence par rapport aux isolignes ; et

définir les limites de poussée pour les intervalles de turbulence.

2. Procédé selon la revendication 1, dans lequel le paramètre de turbulence indicatif de la variation de la vitesse du vent est un écart type d'une vitesse du vent par rapport à une valeur moyenne de la vitesse du vent dans un intervalle de temps.

3. Procédé selon la revendication 2, dans lequel les isolignes définissent l'écart type comme une fonction linéaire de la vitesse du vent dans une intervalle de vitesse du vent.

4. Procédé selon l'une quelconque des revendications 1 - 3, dans lequel la distribution de la vitesse du vent pour le site est basée sur des mesures de vent sur un site de l'éolienne.

5. Procédé pour faire fonctionner une éolienne comprenant un rotor avec une pluralité de pales, le procédé comprenant :

   fournir une pluralité de limites de poussée définies selon l'une quelconque des revendications 1 à 4 ;
   déterminer une vitesse de vent et le paramètre de turbulence ;
   sélection d'une limite de poussée basée sur le paramètre de turbulence déterminé et la vitesse du vent déterminée ; et
   faire fonctionner l'éolienne de telle sorte qu'une poussée sur le rotor soit inférieure à la limite de poussée sélectionnée.

6. Procédé selon la revendication 5, dans lequel le fonctionnement de l'éolienne de sorte qu'une poussée sur le rotor est inférieure à la limite de poussée prédéterminée comprend :

   comparer la poussée sur le rotor avec la limite de poussée sélectionnée, et
   si la poussée est supérieure à la limite de poussée sélectionnée, envoyer un signal de tangage collectif aux pales du rotor pour faire tanguer les pales et réduire la poussée sur le rotor.

7. Procédé selon la revendication 5 ou 6, dans lequel l'estimation de la vitesse du vent comprend :

   déterminer une puissance de sortie ;
   déterminer un angle d'inclinaison des pales ;
   déterminer une vitesse de rotation du rotor ; et
   l'estimation de la vitesse du vent sur la base de la puissance fournie, de l'angle d'inclinaison des pales et de la vitesse de rotation du rotor à l'aide d'un filtre de Kalman.

8. Procédé selon la revendication 6 ou 7, comprenant l'estimation de la poussée sur le rotor et dans lequel l'estimation de la poussée sur le rotor comprend le calcul de la poussée sur le rotor sur la base de la vitesse du vent estimée, de la vitesse de rotation du rotor et de l'angle de pas des pales.

9. Procédé selon l'une quelconque des revendications 5 à 8, dans lequel pour chacune des isolignes prédéfinies, un ou plusieurs niveaux de contrôle sont définis, et dans lequel une limite de poussée n'est pas modifiée jusqu'à ce que le paramètre de turbulence du vent atteigne l'un des niveaux de contrôle.

10. Une éolienne comprenant :

    un rotor avec une pluralité de pales,
    un ou plusieurs systèmes de tangage pour faire tourner les pales autour des axes longitudinaux des pales,
    un générateur ; et
    un système de commande, dans lequel le système de commande est configuré pour déterminer une vitesse de vent et une turbulence, et pour sélectionner un niveau de poussée basé sur la turbulence et la vitesse du vent estimée, dans lequel le niveau de poussée est sélectionné à partir d'une pluralité de limites de poussée pour différentes intervalles de turbulence et pour envoyer des signaux aux systèmes de tangage afin de faire tanguer collectivement les pales de telle sorte que la poussée aérodynamique sur le rotor soit inférieure au niveau de poussée sélectionné, dans lequel
    la pluralité de niveaux de poussée est déterminée par un procédé selon l'une quelconque des revendications 1 à 4.

11. Eolienne selon la revendication 10, dans laquelle le système de commande est configuré pour déterminer une vitesse du rotor, déterminer des angles de pas des pales et déterminer une puissance de sortie du générateur, et dans laquelle le système de commande est en outre configuré pour estimer une vitesse du vent sur la base de la vitesse du rotor, des angles de pas des pales et de la puissance de sortie du générateur.

12. Eolienne selon la revendication 11, dans laquelle le système de commande est en outre configuré pour estimer la turbulence sur la base d'une variation de la vitesse du vent.

13. L'éolienne selon la revendication 10, comprenant en outre un système de télédétection pour mesurer les conditions de vent en amont du rotor et le système de commande est configuré pour recevoir les conditions de vent du système de télédétection et pour déterminer la vitesse du vent et la turbulence.

14. L'éolienne selon la revendication 10, comprenant en outre un anémomètre de nacelle, et le système de commande est configuré pour déterminer la vitesse du vent et la turbulence sur la base des mesures de l'anémomètre de nacelle.

Figure 1

Figure 2

FIG. 3

FIG. 4

FIG. 5

FIG. 6

FIG. 7

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2799711 A